# EUROPEAN PATENT APPLICATION

(11) **EP 1 596 386 A2**
(43) Date of publication of application: **16.11.2005**
(21) Application number: 05010341.5
(22) Date of filing: 12.05.2005
(51) Int. Cl.: G11B 17/04

(54) **Tray drive**

(30) Priority: 12.05.2004 JP 2004142582
(71) Applicant: Funai Electric Co., Ltd., Daito-shi, Osaka (JP)
(72) Inventor: Sakagami, Katsuya, Daito-shi, Osaka (JP)
(74) Representative: Grünecker, Kinkeldey, Stockmair & Schwanhäusser Anwaltssozietät

(57) **Abstract**

In the configuration including: a tray drive mechanism for reciprocally moving a tray with a drive motor as a power source; and a motor drive unit for driving the drive motor, after the movement of the tray in a retracted position is started by applying a first drive voltage to the drive motor, when a predetermined time duration elapses after the time at which the tray is deemed to have moved to the ejected position, the motor drive unit gradually lowers a voltage applied to the drive motor, from the first voltage toward 0 V.

## Description

### BACKGROUND OF THE INVENTION

### 1. Field of the Invention

The present invention relates to a tray drive for reciprocally moving a tray having a disk placed thereon between an ejected position and a retracted position and, more particularly, to a tray drive having omitted therefrom a switch for detecting that the tray has moved to the ejected position.

### 2. Description of the Related Art

A DVD player is provided with a tray for placing a DVD thereon. To replace the DVD, this tray is moved toward the ejected position by a drive motor until a limit switch detects that the tray has moved to the ejected position. Besides, to reproduce the DVD placed on the tray, the tray is moved toward the retracted position by the drive motor until a limit switch detects that the tray has moved to the retracted position (e.g., see JP-A-2000-285561 and JP-A-2001-243687). Besides, a switch for detecting the direction of movement of the tray is provided, and the movement of the tray is controlled based on the output of this switch (e.g., see JP-A-2003-281806).

However, the provision of the two switches: the limit switch for detecting the movement to the ejected position and the limit switch for detecting the movement to the retracted position, involves an increase in the number of parts, an increase in the cost of parts, and an increase in the number of manufacturing steps. Besides, the provision of the switch for detecting the direction of movement of the disk tray complicates the configuration of the switch, thus involving an increase in cost that is equivalent to or greater than the increase in the cost of parts which is involved when the two limit switches are provided. Consequently, the technology shown below is proposed (called a first related art). That is, in this technology, an optical rotary encoder for detecting the amount of rotation of a drive gear for moving the disk tray is provided, and the movement of the disk tray is controlled based on the output of the rotary encoder (e.g., see JP-A-2001-216702).

Besides, the technology shown below is proposed (called a second related art). That is, in this technology, a detection unit for detecting a current of the drive motor for moving the disk tray (or for detecting a voltage applied to the drive motor) is provided. And, when the current value detected exceeds a predetermined value (or the voltage detected becomes lower than a predetermined value) while the disk tray is being moved to the ejected position, then it is determined that the disk tray has moved to the ejected position. Besides, when the current value detected exceeds a predetermined value (or the voltage detected becomes lower than a predetermined value) while the disk tray is being moved to the retracted position, then it is determined that the disk tray has moved to the retracted position (e.g., see JP-A-2002-367263).

However, in the case of using the first related art, there arises the problem shown below. That is, the optical rotary encoder is made into a block having a large number of parts. And, a waveform shaping circuit for a light receiving element is also required. Consequently, the configuration becomes more complicated than that of providing the two limit switches, thus involving a significant increase in the cost of parts.

Besides, in the case of using the second related art, a current detection circuit (voltage detection circuit) for detecting a current of the drive motor is required, and an OP amplifier is indispensable to the current detection circuit (voltage detection circuit), thus involving an increase in the cost of parts.

### SUMMARY OF THE INVENTION

The invention has been conceived to solve the aforesaid problems. An object of the invention is to provide a tray drive configured as follows. That is, even in the case of providing a configuration such that the detection of a current supplied to a drive motor is not performed and that a switch for detecting that a tray has moved to an ejected position is omitted, when the tray is moved to the ejected position, a joggle that occurs in the tray after the movement to the ejected position can be made inconspicuous. And, in the case of using a mechanism such that a load on the drive motor becomes heavy during an initial period of the driving of the drive motor since the transmission path of the drive force of the drive motor is switched in order to move the tray in a retracted position to the ejected position, an impact that occurs when the tray has reached the ejected position can be suppressed, and a change in the movement speed of the tray can be prevented from being made conspicuous. And, the tray can be retracted by adding a force directed along the direction of movement of the tray.

Besides, another object of the invention is to provide a tray drive configured as follows. That is, after the movement of the tray in the retracted position is started by applying a voltage to the drive motor for moving the tray, when a predetermined time duration elapses after the time at which the tray is deemed to have moved to the ejected position, the voltage applied to the drive motor is gradually lowered toward 0 V. Thereby, even in the case of providing a configuration such that the detection of a current supplied to the drive motor is not performed and that a switch for detecting that the tray has moved to the ejected position is omitted, when the tray is moved to the ejected position, a joggle that occurs in the tray after the movement to the ejected position can be made inconspicuous.

Besides, in addition to the aforesaid objects, still another object of the invention is to provide a tray drive configured as follows. That is, in the case of using a mechanism such that a load on the drive motor becomes heavy during an initial period of the driving of the drive motor since the transmission path of the drive force of the drive motor is switched in order to move the tray in the retracted position to the ejected position, an impact that occurs when the tray has reached the ejected position can be suppressed.

Besides, in addition to the aforesaid objects, still another object of the invention is to provide a tray drive configured as follows. That is, the invention uses a mechanism such that a load on the drive motor becomes heavy during the initial period of the driving since the transmission path of the drive force of the drive motor is switched in order to move the tray in the retracted position to the ejected position. Thus, in the case of applying a high voltage to the drive motor during the initial period of the driving and subsequently lowering the voltage applied, an impact that occurs when the tray has reached the ejected position can be suppressed.

To solve the aforesaid problems, the tray drive according to the invention is applied to a tray drive including: a tray that moves reciprocally between an ejected position in which to perform replacement etc. of a disk placed thereon and a retracted position in which to perform reproduction etc. of the disk placed thereon; a tray drive mechanism for reciprocally moving the tray with a drive motor as a power source; a motor drive unit for driving the drive motor; a tray position detection unit for detecting that the tray has moved to the retracted position; and a voltage detection unit for detecting whether the drive motor has generated an electromotive force or not, the tray drive mechanism including a mechanism chassis that, having a spindle motor for rotationally driving the disk and a pickup for reading data recorded on the disk, moves reciprocally between a clamping position operable to clamp the disk and an unclamping position in which to move the tray,
in which, to move the tray in the retracted position to the ejected position, the tray drive mechanism switches the transmission path of the output of the drive motor, thereby sequentially performing the movement of the mechanism chassis from the clamping position to the unclamping position and the movement of the tray from the retracted position to the ejected position. And, to move the mechanism chassis from the clamping position to the unclamping position, the motor drive unit applies to the drive motor a second drive voltage that is higher than a first drive voltage. And, when a predetermined time duration elapses after the time at which the mechanism chassis is deemed to have moved to the unclamping position, the motor drive unit gradually lowers a voltage applied to the drive motor, from the second drive voltage toward the first drive voltage. And, when a predetermined time duration elapses after the time at which the tray is deemed to have moved to the ejected position, the motor drive unit gradually lowers the voltage applied to the drive motor, from the first drive voltage toward 0 V. And, when the voltage detection unit detects the generation of the electromotive force with the driving of the drive motor being stopped, the motor drive unit applies to the drive motor a voltage of polarity with which to move the tray toward the retracted position, until the tray position detection unit detects that the tray has moved to the retracted position.

That is, immediately after moving to the ejected position, the try is in the state where it is pressed toward the ejected position by the drive force of the drive motor. And, the driving of the drive motor is stopped, thereby stopping the tray from being pressed toward the ejected position. Accordingly, even when the tray is in the ejected position, a stabilized position in which the tray is placed when the drive motor is driven and a stabilized position in which the tray is placed when the drive motor is stopped are different in position from each other. However, since the voltage applied to the drive motor lowers gradually from the first voltage toward 0 V, a change, from the stabilized position in which the tray is placed when the drive motor is driven to the stabilized position in which the tray is placed when the drive motor is stopped, becomes slow. And, during the period where the load is heavy, a high voltage is applied to the drive motor, so that the drive motor generates a sufficient drive force. And, when the tray is moved to reduce the weight of the load, the voltage applied to the drive motor is changed to a low voltage, so that the movement speed of the tray turns to a suppressed speed. And, during the movement of the tray, a change in the voltage applied to the drive motor becomes gradual, so that the speed of the tray changes gradually. And, when the force directed along the direction of movement of the tray is applied to the tray, the drive motor generates the electromotive force, so that the tray is retracted to the retracted position.

Besides, the tray drive according to the invention is applied to a tray drive including: a tray that moves reciprocally between an ejected position in which to perform replacement etc. of a disk placed thereon and a retracted position in which to perform reproduction etc. of the disk placed thereon; a tray drive mechanism for reciprocally moving the tray with a drive motor as a power source; and a motor drive unit for driving the drive motor. And, the motor drive unit is configured as follows. That is, after the movement of the tray in the retracted position is started by applying a first drive voltage to the drive motor, when a predetermined time duration elapses after the time at which the tray is deemed to have moved to the ejected position, the motor drive unit gradually lowers a voltage applied to the drive motor, from the first voltage toward 0 V.

That is, immediately after moving to the ejected position, the try is in the state where it is pressed toward the ejected position by the drive force of the drive motor. And, the driving of the drive motor is stopped, thereby stopping the tray from being pressed toward the ejected position. Accordingly, even when the tray is in the ejected position, a stabilized position in which the tray is placed when the drive motor is driven and a stabilized position in which the tray is placed when the drive motor is stopped are different in position from each other. However, since the voltage applied to the drive motor lowers gradually from the first voltage toward 0 V, a change, from the stabilized position in which the tray is placed when the drive motor is driven to the stabilized position in which the tray is placed when the drive motor is stopped, becomes slow.

Besides, in addition to the aforesaid configurations, the tray drive mechanism is configured as follows. That is, the tray drive mechanism includes a mechanism chassis that, having a spindle motor for rotationally driving the disk and a pickup for reading data recorded on the disk, moves reciprocally between a clamping position operable to clamp the disk and an unclamping position in which to move the tray, wherein, to move the tray in the retracted position to the ejected position, the tray drive mechanism switches the transmission path of the output of the drive motor, thereby sequentially performing the movement of the mechanism chassis from the clamping position to the unclamping position and the movement of the tray from the retracted position to the ejected position. And, the motor drive unit is configured as follows. That is, to move the mechanism chassis from the clamping position to the unclamping position, the motor drive unit applies to the drive motor a second drive voltage that is higher than the first drive voltage, whereas, when a predetermined time duration elapses after the time at which the mechanism chassis is deemed to have moved to the unclamping position, the motor drive unit changes the voltage applied to the drive motor, from the second drive voltage to the first drive voltage.

That is, during the period where the load is heavy, a high voltage is applied to the drive motor, so that the drive motor generates a sufficient drive force. And, when the tray is moved to reduce the weight of the load, the voltage applied to the drive motor is changed to a low voltage, so that the movement speed of the tray turns to a suppressed speed.

Besides, in addition to the aforesaid configurations, the motor drive unit is configured such that it gradually lowers the voltage applied to the drive motor, thereby changing the voltage applied to the drive motor, from the second drive voltage to the first drive voltage. That is, during the movement of the tray, the voltage applied to the drive motor changes gradually, so that the speed of the tray changes gradually.

According to the invention, in the state where the tray is moved to the ejected position, the voltage applied to the drive motor lowers gradually from the first voltage toward 0 V. Therefore, a change, from the stabilized position in which the tray is placed when the drive motor is driven to the stabilized position in which the tray is placed when the drive motor is stopped, becomes slow in the tray positioned in the ejected position. And, during the period where the load is heavy, a high voltage is applied to the drive motor, so that the drive motor generates a sufficient drive force. When the tray is thus moved to reduce the weight of the load, the voltage applied to the drive motor is changed to a low voltage, so that the movement speed of the tray turns to a suppressed speed. And, the speed during the movement of the tray changes gradually. And, when a force directed along the direction of movement of the tray is applied to the tray, the drive motor generates the electromotive force, so that the tray is retracted to the retracted position. Consequently, even in the case of providing a configuration such that the detection of a current supplied to the drive motor is not performed and that a switch for detecting that the tray has moved to the ejected position is omitted, when the tray is moved to the ejected position, a joggle that occurs in the tray after the movement to the ejected position can be made inconspicuous. Besides, in the case of using a mechanism such that the load on the drive motor becomes heavy during an initial period of the driving of the drive motor since the transmission path of the drive force of the drive motor is switched in order to move the tray in the retracted position to the ejected position, an impact that occurs when the tray has reached the ejected position can be suppressed, and a rapid change in the movement speed of the tray can be prevented. Besides, the tray can be retracted by adding the force directed along the direction of movement of the tray.

Besides, according to the invention, in the state where the tray is moved to the ejected position, the voltage applied to the drive motor lowers gradually from the first voltage toward 0 V. Therefore, a change, from the stabilized position in which the tray is placed when the drive motor is driven to the stabilized position in which the tray is placed when the drive motor is stopped, becomes slow in the tray in the ejected position. Consequently, even in the case of providing a configuration such that the detection of a current supplied to the drive motor is not performed and that a switch for detecting that the tray has moved to the ejected position is omitted, when the tray is moved to the ejected position, a joggle that occurs in the tray after the movement to the ejected position can be made inconspicuous.

Furthermore, during the period where the load is heavy, a high voltage is applied to the drive motor, so that the drive motor generates a sufficient drive force. And, when the tray is moved to reduce the weight of the load, the voltage applied to the drive motor is changed to a low voltage, so that the movement speed of the tray turns to a suppressed speed. Consequently, in the case of using a mechanism such that the load on the drive motor becomes heavy during an initial period of the driving of the drive motor since the transmission path of the drive force of the drive motor is switched in order to move the tray in the retracted position to the ejected position, an impact that occurs when the tray has reached the ejected position can be suppressed.

Still furthermore, during the movement of the tray, the voltage applied to the drive motor changes gradually, so that the speed of the tray changes gradually. Consequently, the invention uses a mechanism such that the load on the drive motor becomes heavy during the initial period of the driving since the transmission path of the drive force of the drive motor is switched in order to move the tray in the retracted position to the ejected position. Thus, in the case of applying a high voltage to the drive motor during the initial period of the driving and subsequently lowering the voltage applied, a rapid change in the movement speed of the tray can be prevented.

### BRIEF DESCRIPTION OF THE DRAWINGS

These and other objects and advantages of this invention will become more fully apparent from the following detailed description taken with the accompanying drawings in which:
Fig. 1 is a block diagram showing the electrical configuration of a DVD player using an embodiment of a tray drive according to the invention;
Fig. 2 is a flowchart showing the major operation of the embodiment to move a tray from a retracted position to an ejected position;
Fig. 3 is a flowchart showing the major operation of the embodiment to move the tray toward the retracted position:
Fig. 4 is an explanatory diagram showing a change in voltage applied to a drive motor;
Fig. 5 is a perspective view showing the exterior of a disk device including the one embodiment of the tray drive according to the invention;
Fig. 6 is a plan view showing the condition of the initial state (power-off state) of a tray drive mechanism provided in the disk device;
Fig. 7A is a plan view showing the tray drive mechanism in disk reproduction operation; Fig. 7B is a plan view showing the tray drive mechanism in the initial stage of its transition to tray opening operation;
Fig. 8 is a plan view showing the tray drive mechanism in course of tray opening operation; and
Fig. 9A is a sectional side view showing the tray drive mechanism during tray closing operation; and Fig. 9B is a side view taken in the direction of arrow X of Fig. 9A.

### DETAILED DESCRIPTION OF THE PREFERRED EMBODIMENTS

An embodiment of the invention will hereinafter be described with reference to the drawings.

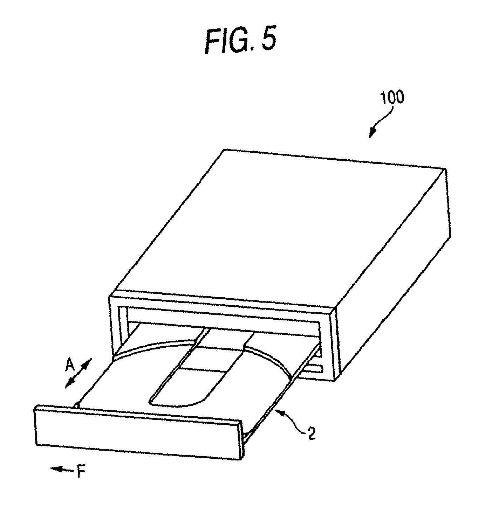

Fig. 5 shows the exterior of a disk device provided with an embodiment of a tray drive according to the invention.

A disk device 100 is a device into the inside of which is loaded a disk, such as a DVD, placed on a tray 2, wherein the disk loaded is irradiated with a laser beam to record/reproduce a signal. Loading/unloading of the disk is performed as the tray 2 having the disk placed thereon is reciprocally moved by a tray drive mechanism between a retracted position and an ejected position (the direction of which movement is shown by arrow A). The movement of the tray 2 to the retracted position is detected by a tray position detection unit (which is described in detail later), but a unit for detecting the movement of the tray 2 to the ejected position is omitted.

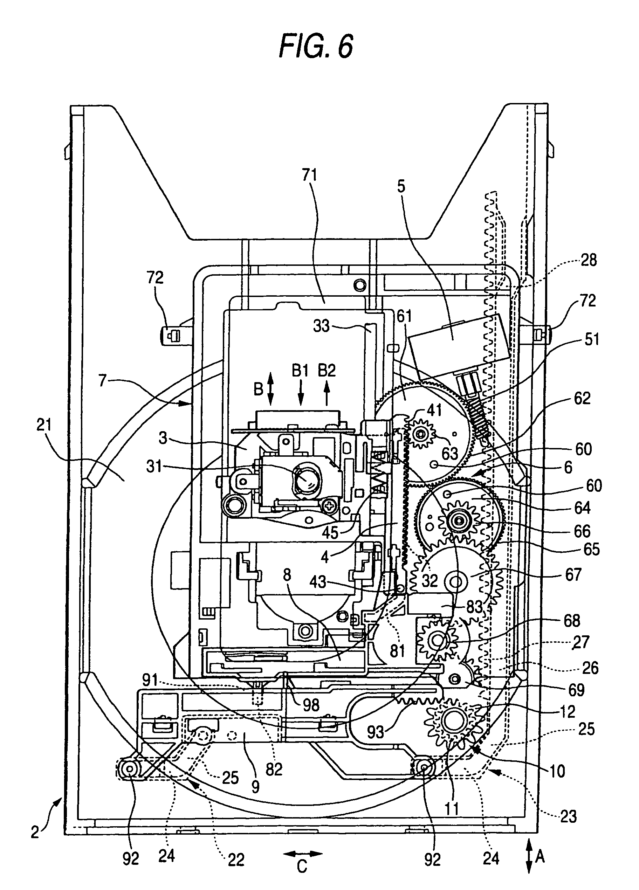

Fig. 6 shows the tray drive mechanism in an initial state (power-off state). That is, a tray drive mechanism 1, which is a mechanism for causing a feed motor (the drive motor in the claims) 5 for feed-driving a pickup 3 to move the tray 2, includes the pickup 3 for irradiating the disk with the laser beam to reproduce a signal and the feed motor 5. Besides, the tray drive mechanism 1 includes a train of gears 6 made up of a plurality of gears, such as a feed gear 61, which are rotationally driven by the feed motor 5 to drive the pickup 3.

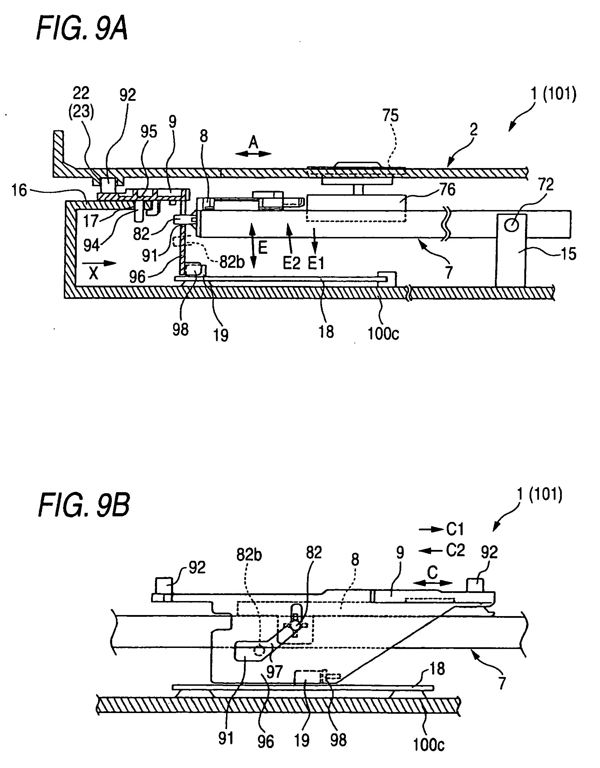

Besides, the tray drive mechanism 1 includes a mechanism chassis 7. This mechanism chassis 7 is mounted with the pickup 3, the feed motor 5, the feed gear 61, a turntable 75 (see Fig. 9A) for rotationally driving the disk , a spindle motor 76 for rotating the turntable 75, etc. Besides, the tray drive mechanism 1 includes a plate trigger 8, cam slider 9, etc. for moving up and down the mechanism chassis 7 in clamping and unclamping the disk.

A recessed portion 21 for placing the disk thereon is formed on the upper surface side of the tray 2. Besides, a pair of cam grooves 22, 23 engaging with bosses 92 of the cam slider 9, as well as a rack 27 meshing with a tray drive gear 10, are formed on the lower surface side of the tray 2. And, the cam groove 22 includes: an inclined portion 25 for moving the tray 2 in an opening and closing direction A as the cam groove 22 is pushed by the boss 92 along with sliding of the cam slider 9 in the direction of arrow C; and a perpendicular portion 24 formed in the direction of arrow C perpendicular to the tray opening and closing direction A. Besides, the cam groove 23 includes an opening/closing guide portion 26 extended from the terminal end of an inclined portion 25 toward the rear end of the tray 2, a perpendicular portion 24, and the inclined portion 25.

The pickup 3 includes a semiconductor laser for emitting the laser beam, an obj ective lens 31 for focusing the laser beam on a recording surface of the disk, a light receiving element for receiving the laser beam reflected by the disk, a rack 32 meshing with the feed gear 61, etc. And, the pickup 3 is fed radially of the disk (i.e., in a feed direction B) as guided by a guide shaft 33 and driven from the feed gear 61 (an upper gear 63) (the feed direction B is the same as the opening and closing direction A of the tray 2).

A rack member 4, for converting the rotational drive force of the feed gear 61 to a sliding drive force in the feed direction B and transmitting the sliding drive force to the plate trigger 8, is attached to the top of the rack 32 of the pickup 3 so as to be slidable in the feed direction B with respect to the pickup 3. The rack member 4 includes a rack 41 that overlaps with the rack 32 and meshes with the upper gear 63, and the rack 32 and the rack 41 configure a double rack.

And, the rack member 4 is urged toward the outer periphery B2 of the disk with respect to the pickup 3 by a coil spring 45 one end of which abuts the pickup 3 and the other end of which abuts the rack member 4. The reaction force of the coil spring 45 urges the pickup 3 toward the inner periphery B1 of the disk. This results in less rattling in the meshing engagement of the feed gear 61 with the rack 32 and the rack 41, so that the pickup 3 is fed with good accuracy. Besides, a boss 43 for transmitting the drive force to the plate trigger 8 is formed at the leading end of the rack member 4.

A worm gear 51 is incorporated in the output shaft of the feed motor 5, and the output of the feed motor 5 is transmitted to the feed gear 61 via the worm gear 51. The feed gear 61 has a,lower gear 62 meshing with the worm gear 51 and a gear 64 and also the upper gear 63 meshing with the rack 32 of the pickup 3 and the rack 41 of the rack member 4.

The train of gears 6 includes, in addition to the feed gear 61, gears 64, 67, 68, 69 pivotally supported on the mechanism chassis 7 and the tray drive gear 10 pivotally supported on a chassis 100c (see Figs. 9A and 9B) of the disk device 100. And, the gear 64 includes a lower gear 65 meshing with the feed gear 61 and an upper gear 66 meshing with the gear 67. Additionally, phase marks 60 for phase matching are stamped one on each of the feed gear 61 and the gear 64, and both gears 61, 64 are assembled to the mechanism chassis 7 with their phase marks 60 opposed to each other.

The output of the feed motor 5 is transmitted to the tray drive gear 10 via the worm gear 51, feed gear 61, and gears 64, 67, 68, 69 in sequence. Additionally, the tray drive gear 10 includes an upper gear 11 meshing with a rack 93 of the cam slider 9 and a lower gear 12 meshing with the rack 27 of the tray 2.

The mechanism chassis 7 is mounted with the pickup 3, feed motor 5, feed gear 61, gears 64, 67, 68, 69, turntable 75, and spindle motor 76 (see Fig. 9A) for rotationally driving the turntable 75. Besides, an opening 71 for fitting the pickup 3 thereinto is formed in the mechanism chassis 7. Besides, the mechanism chassis 7 includes a pair of shaft portions 72 for providing a connection between the mechanism chassis 7 and the chassis 100c of the disk device 100, which serve as a base used to move the pickup 3 in the feed direction B.

The shaft portions 72, formed on one end side of the mechanism chassis 7, are pivotably supported by support pieces 15 (see Fig. 9A) projected from the chassis 100c. Besides, the plate trigger 8 is attached to the other end side of the mechanism chassis 7 so as to be slidable in the direction of arrow C. And, when the plate trigger 8 is driven up and down by the cam slider 9, the mechanism chassis 7 is pivoted around the shaft portions 72. Thereby, the turntable 75 disposed between the shaft portions 72 and the plate trigger 8 is moved up and down to perform the clamping and unclamping of the disk.

The plate trigger 8 is formed with a cam groove 81 that engages with the boss 43 of the rack member 4 when the rack member 4 is driven toward the inner periphery B1 and a boss 82 for transmitting the drive force to the cam slider 9. Besides, the plate trigger 8 includes a gear retention plate 83 that, positioned above the gears 67, 68, 69, partially overlaps in plan view with the gears 67, 68, 69. And, the plate trigger 8 is attached to the mechanism chassis 7 so as to be slidable in the direction of arrow C perpendicular to the tray opening and closing direction A.

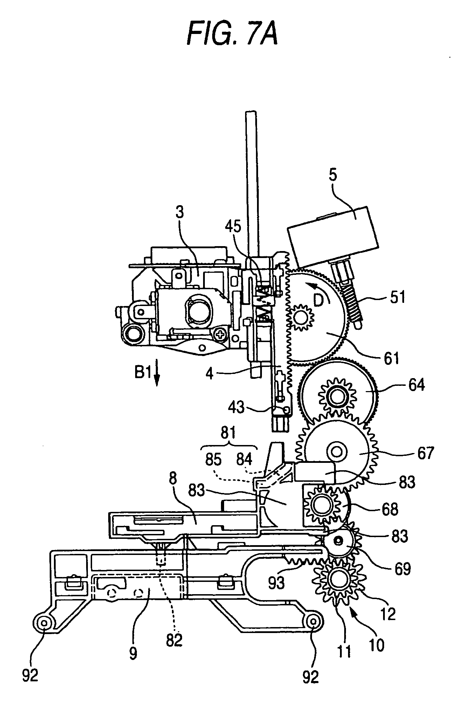

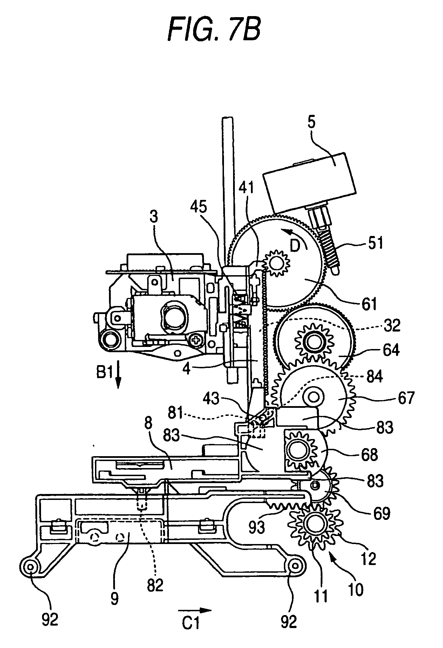

As shown in Figs. 7A and 7B, the cam groove 81 includes: a slope portion 84 for effecting substantially 90° conversion of the direction of the drive force transmitted by the boss 43; and a boss restraint portion 85 that, extended in the direction of arrow C substantially perpendicular to the feed direction B of the pickup 3 from the terminal end of the slope portion 84, restrains the movement of the boss 43 in the feed direction B.

The cam slider 9, supported on the chassis 100c so as to be slidable in the direction of arrow C, includes a cam groove 91 (see Figs. 9A and 9B) engaging with the boss 82 of the plate trigger 8, a pair of the bosses 92 that are engaged with the cam grooves 22, 23 of the tray 2 to guide the tray 2, and the rack 93 meshing with the upper gear 11 of the tray drive gear 10.

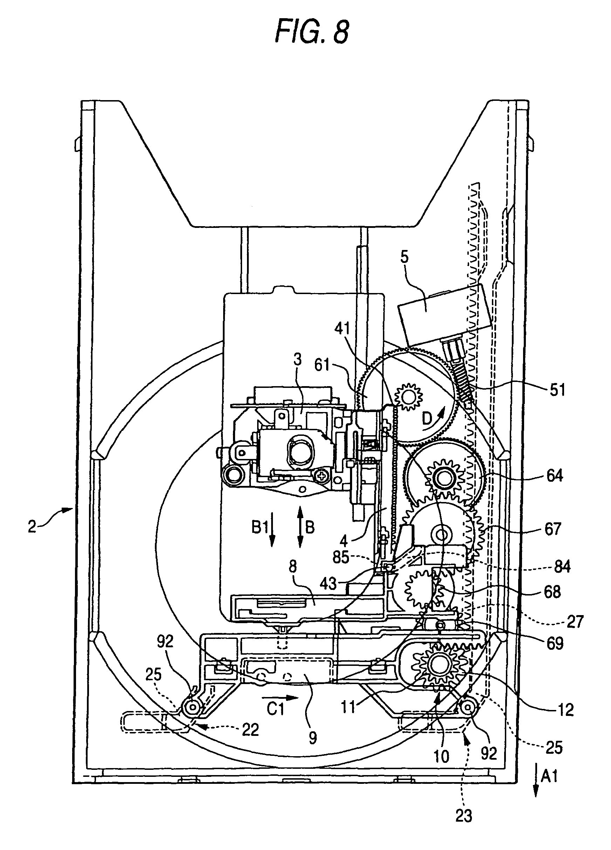

The tray opening operation of the tray drive mechanism 1 configured as aforesaid will be described with reference to Figs. 7A, 7B and 8. In Figs. 7A and 7B, the tray 2, the mechanism chassis 7, etc. are omitted from the illustration, and Fig. 7A shows the condition of the tray drive mechanism 1 during disk reproduction operation, while Fig. 7B shows the condition of the tray drive mechanism 1 during the initiation of the tray opening operation.

To reproduce the disk, the pickup 3 is feed-driven by the feed gear 61 so as to match the position of a track of the disk. On this occasion, the rack member 4 is also feed-driven together with the pickup 3, and the boss 43 is out of engagement with the cam groove 81. Besides, the rack 93 of the cam slider 9 is out of engagement with the upper gear 11 of the tray drive gear 10, and the rack 27 (see Fig. 6) of the tray 2 is out of engagement with the lower gear 12 of the tray drive gear 10 (on which occasion the position of the tray 2 is positioned in the retracted position described in the claims).

When the reproduction operation ends, the feed gear 61 is rotationally driven in the direction of arrow D. Accordingly, the pickup 3 and the rack member 4 are feed-driven toward the inner periphery B1 and thus return to the initial state shown in Fig. 6 (the position of the pickup 3 on this occasion is called an inner peripheral stop position).

When the operation for moving the tray in the retracted position to the ejected position is started, as shown in Fig. 7B, the feed gear 61 is rotationally driven further in the direction of arrow D. Consequently, the pickup 3 and the rack member 4 are feed-driven toward the inner periphery B1, thus releasing meshing engagement between the rack 32 of the pickup 3 and the feed gear 61, and only the rack 41 of the rack member 4 meshes with the feed gear 61. The rack member 4 is driven toward the inner periphery B1, and the boss 43 enters the cam groove 81 of the plate trigger 8 and pushes a side surface of the slope portion 84 of the cam groove 81. As a result, the plate trigger 8 is slidingly driven in the direction of arrow C1.

The boss 82 of the plate trigger 8, in engagement with the cam groove 91 of the cam slider 9, transmits to the cam slider 9 the drive force of sliding movement imparted by the rack member 4. Accordingly, the cam slider 9 moves slidingly in the direction of arrow C1 in conjunction with the plate trigger 8, and the rack 93 meshes with the tray drive gear 10. Consequently, the cam slider 9 is driven by the plate trigger 8 and the tray drive gear 10.

Furthermore, when the feed gear 61 is rotated in the direction of arrow D, the state shown in Fig. 8 is formed (the mechanism chassis 7 is omitted from the illustration). When the state of Fig. 8 is formed, the boss 43 passes through the slope portion 84 and reaches the boss restraint portion 85, so that the plate trigger 8 stops moving. And, in course of this operation, the rack 41 of the rack member 4 and the feed gear 61 are released from meshing engagement with each other, so that the driving of the cam slider 9 switches from the driving thereof by the plate trigger, 8 to the driving thereof by the tray drive gear 10. Besides, the boss 43 reaches the boss restraint portion 85, thereby restraining the rack member 4 from moving in the feed direction B.

The cam slider 9 driven by the tray drive gear 10 moves slidingly in the direction of arrow C1, and the boss 92 passes through the inclined portions 25 of the cam grooves 22, 23 of the tray 2. Consequently, a side surface of the inclined portion 25 is pushed by the boss 92 to slidingly move the tray 2 in the opening direction A1, so that the rack 27 meshes with the lower gear 12 of the tray drive gear 10. Thereafter, the tray 2 moves slidingly in the opening direction A1 as driven by the tray drive gear 10. As a result, the tray 2 moves to the ejected position shown in Fig. 5.

Additionally, to close the tray 2, the feed motor 5 rotates in a reverse direction, so that the opposite operation to the aforesaid operation will be executed.

Figs. 9A and 9B show the condition of the tray drive mechanism 1 achieved when the tray 2 is in the retracted position (i.e., during tray closing operation and clamping operation), and the unclamping/clamping operation of the disk will be described with reference to Figs. 9A and 9B.

As shown in Fig. 9A, the shaft portions 72 formed on the one end side of the mechanism chassis 7 are supported by the support pieces 15 erected from the chassis 100c. Thereby, the mechanism chassis 7 is made pivotable with respect to the chassis 100c. And, in the state where the boss 82 of the plate trigger 8 attached to the other end side of the mechanism chassis 7 is guided by the cam groove 91 of the cam slider 9, the boss 82 is driven up and down, whereby the mechanism chassis 7 is pivoted in the direction of arrow E around the shaft portions 72.

Additionally, the turntable 75 for lifting from the tray 2 and rotating the disk is disposed between the shaft portions 72 of the mechanism chassis 7 and the plate trigger 8. when the mechanism chassis 7 pivots in the direction of arrow E2, a clamper (omitted from the illustration) positioned above the disk and the turntable 75 sandwich and hold (chuck) the disk therebetween.

Besides, the cam slider 9, made up of a sliding surface 95 that slides along a support portion 16 formed on the chassis 100c and an opposite surface 96 that is erected from the sliding surface 95 so as to be opposed to the plate trigger 8, is attached to the support portion 16. Besides, a guide groove 17 for guiding the cam slider 9 during its sliding movement is formed in the support portion 16 of the chassis 100c, and a raised portion 94 engaging with the guide groove 17 is formed on the sliding surface 95 of the cam slider 9.

As shown in Fig. 9B, the cam groove 91 having an inclined portion 97 is formed in the opposite surface 96 of the cam slider 9. Besides, the boss 82 of the plate trigger 8 engages with the cam groove 91 and moves up and down as guided by the inclined portion 97 along with sliding of the cam slider 9 in the direction of arrow C.

After the driving of the cam slider 9 switches from the driving thereof by the plate trigger 8 to the driving thereof by the tray drive gear 10 (see Fig. 8), the cam slider 9 moves slidingly in the direction of arrow C1 as driven by the tray drive gear 10. Then, the boss 82 moves down as guided by the inclined portion 97, and the mechanism chassis 7 pivots in the direction of arrow E1 and then inclines. In accordance therewith, the turntable 5 moves down, thus releasing the disk from clamping.

On the contrary, to clamp the disk, the feed motor is rotated in reverse, thus performing the opposite operation to the aforesaid operation. That is, now suppose that, since the tray 2 is in the ejected position, the boss of the plate trigger is in the position indicated by 82b. Then, when the feed motor 5 is rotated in reverse in this state, the cam slider 9 slidingly moves in the direction of arrow C2, and the boss 82 moves up as guided by the inclined potion 97, so that the mechanism chassis 7 pivots in the direction of arrow E2. In accordance therewith, the turntable 75 moves up and lifts the disk, and the turntable 75 and the clamper sandwich and clamp the disk therebetween. Thus, the unclamping/ clamping of the disk is performed by the driving of the feed motor 5.

The operation of detecting that the tray 2 has moved to the retracted position will be described below. A projecting piece 98 projecting to the mechanism chassis 7 side is provided in the vicinity of the lower end of the opposite surface 96 of the cam slider 9. On the other hand, a detection switch 19 for detecting sliding movement of the cam slider 9 is mounted at a position on a printed circuit board 18 corresponding to the projecting piece 98 (the tray position detection unit described in the claims includes the projecting piece 98 and the detection switch 19). Consequently, when the cam slider 9 is slidingly moved in the direction of arrow C2 to provide the state in which the turntable 75 and the clamper clamp the disk therebetween, the detection switch 19 is operated by the projecting piece 98 to output a signal indicating that the tray 2 has moved to the retracted position (i.e., a signal indicative of OFF).

As described above, the embodiment is configured as follows. That is, based on the drive force generated by one drive motor (the feed motor 5), radial movement of the pickup 3 and clamping/unclamping of the disk are performed, and the tray 2 is reciprocally moved between the retracted position and the ejected position. Consequently, in the state where the pickup 3 is in the inner peripheral stop position (i.e., in the state where the tray 2 is in the retracted position and where the detection switch 19 outputs the signal indicating that the tray 2 is in the retracted position), to move the tray 2 toward the ejected position, a load on the feed motor 5 becomes heavy during a period before the rack 27 meshes with the lower gear 12 of the tray drive gear 10 (i.e., during an initial period of the driving of the feed motor 5 and during a period of about 0.15 seconds in the actual device). And, the load on the feed motor 5 is reduced after the rack 27 meshes with the lower gear 12 of the tray drive gear 10.

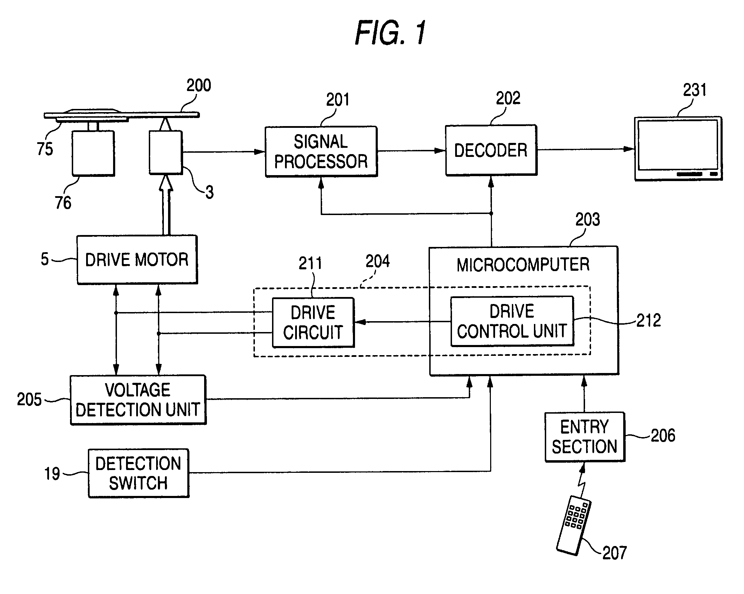

Fig. 1 is a block diagram showing the electrical configuration of a DVD player having the disk device described in the aforesaid.

As already described, the pickup 3 reads data recorded on a disk (DVD) 200 that is rotationally driven by the spindle motor 76 (reference numeral 75 depicts the turntable). A signal processor 201 demodulates digital data from a signal outputted by the pickup 3 and outputs to a decoder 202 a program stream obtained by performing error correction of the digital data demodulated. The decoder 202 performs decompression of the program stream outputted by the signal processor 201 and thereby generates and outputs an analog picture signal and an analog sound signal to a television receiver 231 provided in the external.

An entry section 206 includes a plurality of key switches (omitted from the illustration), such as an open/close key and a power key, which are disposed on a front panel of the DVD player, a light receiving unit for receiving an infrared signal transmitted from a remote controller 207, etc. Thus, instructions from a user are entered into the entry section 206. Besides, the instructions entered are sent to a microcomputer 203.

A voltage detection unit 205 includes an amplifier circuit for amplifying an electromotive force generated by the drive motor 5, a rectifier and smoothing circuit for rectifying and smoothing the output of the amplifier circuit, etc. Thus, the voltage detection unit 205 detects whether the drive motor 5 has generated the electromotive force or not. And, when the drive motor 5 generates the electromotive force, the voltage detection unit 205 notifies the microcomputer 203 of the generation of the electromotive force.

That is, in the state where the driving of the drive motor 5 is stopped, when the tray 2 is pushed or pulled by the user, the drive motor 5 is rotated by the force of pushing or pulling the tray 2, so that the drive motor 5 generates the electromotive force. Accordingly, when the voltage detection unit 205 notifies the microcomputer 203 of the generation of the electromotive force, the microcomputer 203 determines that the tray 2 is pushed or pulled by the user.

As already described, the detection switch 19, which is a switch configuring the tray position detection unit described in the claims as paired with the projecting piece 98, detects that the tray 2 has moved to the retracted position (the detection switch 19 turns off when the tray 2 moves to the retracted position and turns on when the tray 2 is in a different position from the retracted position).

A drive circuit 211 performs switching of the path of DC power supplied to the drive motor 5 in accordance with the output of the microcomputer 203. Thereby, the mean value of voltage applied to the drive motor 5 is set to a voltage corresponding to the output of a drive control unit 212.

The microcomputer 203 controls major operations for the DVD player. That is, when a user's instruction entered into the remote controller 207 is of reproduction, the microcomputer 203 controls the operation of the signal processor 201 and the operation of the decoder 202, thereby reproducing the disk 200, thus allowing the television receiver 231 to display an image. Besides, when a user's instruction entered into the remote controller 207 is of various settings for the device, after allowing the television receiver 231 to display an image displaying a setting menu screen, the microcomputer 203 performs the setting corresponding to the instruction entered using the remote controller 207.

The drive control unit 212, made into a block configured of part of the function of the microcomputer 203, controls the voltage (i.e., the mean value of voltage) applied to the drive motor (feed motor) 5 via the drive circuit 211 (the drive control unit 212 and the drive circuit 211 configure the motor drive unit 204 described in the claims).

To move the tray 2 in the retracted position to the ejected position, at the start time of the movement, the motor drive unit 204 applies to the drive motor 5 a second drive voltage that is the highest voltage in an applicable voltage range. And, when a predetermined time duration elapses after the time at which the mechanism chassis 7 is deemed to have moved to an unclamping position, the motor drive unit 204 gradually lowers the voltage applied to the drive motor 5, from the second drive voltage toward a first drive voltage that is lower than the second drive voltage. Thereafter, when a predetermined time duration elapses after the time at which the tray 2 is deemed to have moved to the ejected position, the motor drive unit 204 gradually lowers the voltage applied to the drive motor 5, from the first drive voltage toward 0 V.

Besides, in the state where the tray 2 is deemed to be in the ejected position, when the voltage detection unit 205 detects the generation of the electromotive force of the drive motor 5, the motor drive unit 204 applies to the drive motor 5 a voltage of polarity with which to move the tray 2 toward the retracted position, until the detection switch 19 outputs the signal indicating that the tray 2 has moved to the retracted position.

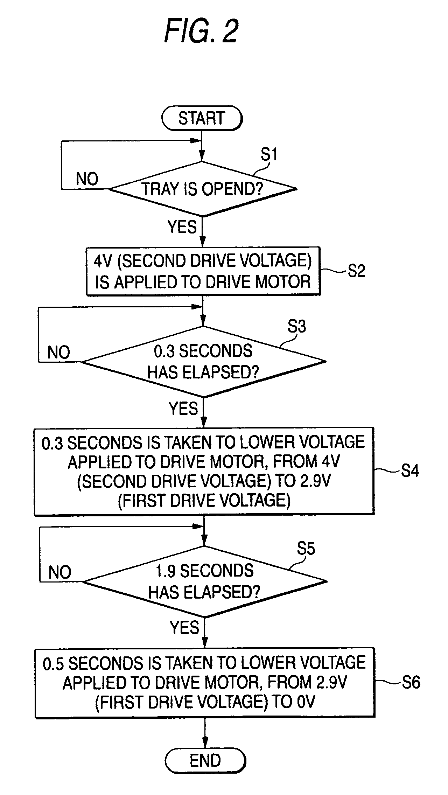

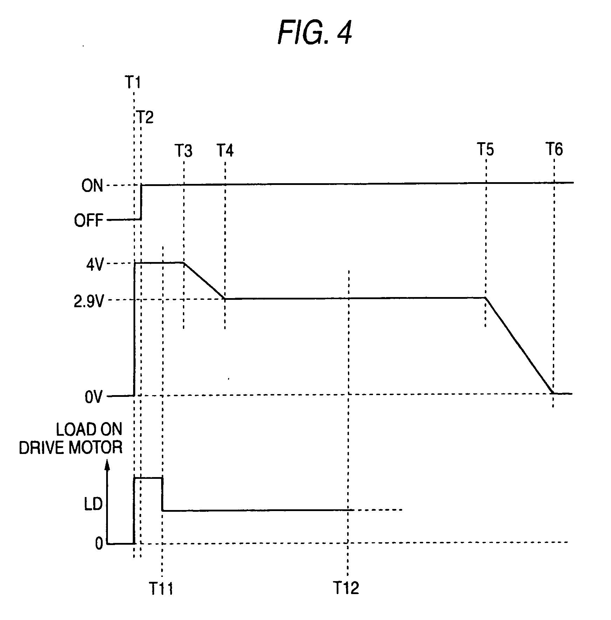

Fig. 2 a flowchart showing the major operation of the embodiment to move the tray from the retracted position toward the ejected position. Fig. 4 is an explanatory diagram showing a change in the voltage applied to the drive motor. The operation of the embodiment will be described with reference to Figs. 2 and 4 according to need.

Now suppose that the pickup 3 is in the inner peripheral stop position. When the feed gear 61 is rotated in the direction of arrow D in this state, the load on the drive motor 5 is large during the period (time T1 to time T11) where the mechanism chassis 7 is pivoted from a clamping position to the unclamping position. On the contrary, the load on the drive motor 5 is small during the period where the tray 2 moves to the opening direction A1 as driven by the tray drive gear 10 (i.e., during the period after time T11).

That is, as shown by LD in Fig. 4, the load on the drive motor 5 is large during the period (time T1 to time T11) where the mechanism chassis 7 is moved from the clamping position to the unclamping position, and is small after the mechanism chassis 7 moves to the unclamping position (i.e., after time T11).

The load on the drive motor 5 changes as aforesaid. Consequently, while the pickup 3 is in the inner peripheral stop position shown in Fig. 6 (i.e., while the tray is in the retracted position and while the mechanism chassis 7 is in the clamping position), when the open/close key is operated (time T1), the motor drive unit 204 generates a maximum torque in the drive motor 5. Therefore, the motor drive unit 204 applies to the drive motor 5 a voltage of 4V (i.e., the second drive voltage) that is the highest voltage in the voltage range applicable to the drive motor 5 (steps S1, S2).

As a result, the cam slider 9 moves in the direction of arrow C1, so that the detection switch 19 changes from an off state to an on state (time T2). Subsequently, the mechanism chassis 7 in the clamping position moves to the unclamping position as pivoted in the direction of arrow E1. Thereafter, when time T11 (the time at which about 0.15 seconds has elapsed after time T2) is reached, the rack 27 meshes with the lower gear 12 of the tray drive gear 10. Thereby, the tray 2 is driven by the tray drive gear 10 to start sliding movement in the opening direction A1. Accordingly, the load on the drive motor 5 decreases after time T11.

And, when a predetermined time duration (0.15 seconds) elapses after time T11 at which the mechanism chassis 7 is deemed to have moved to the unclamping position (time T3), the motor drive unit 204 takes a period of 0.3 seconds (the period from time T3 to time T4) to gradually lower the voltage applied to the drive motor 5, from 4 V of the second drive voltage to 2.9 V of the first drive voltage (steps S3, S4). Consequently, the tray 2, which has moved at high speed immediately before time T3, gradually reduces its speed between time T3 and time T4. That is, the tray 2 inconspicuously reduces its movement speed.

After time T4, 2.9 V of the first drive voltage continues to be applied to the drive motor 5. And, when a predetermined time duration (1 second) elapses after time T12 at which the tray 2 is deemed to have moved to the ejected position (i.e., after the time at which 0.9 seconds has elapsed after time T4) (i.e., when time T5 at which another 1.9 seconds has elapsed after time T4 is reached), the motor drive unit 204 takes a period of 0.5 seconds to gradually lower the voltage applied to the drive motor 5, from 2.9 V of the first drive voltage toward 0 V (steps S5, S6).

On the other hand, when time T12 is reached, the tray 2 moves to the ejected position and is in the state where it abuts a not-shown stopper. Besides, on this occasion, the rack 27 is pressed toward the ejected position by the lower gear 12 of the tray drive gear 10. Accordingly, the leading end portion of the tray 2 is in the state where it is pushed away slightly in a direction (indicated by arrow F in Fig. 5) opposite the side of the tray 2 on which the rack 27 is formed.

The aforesaid state continues until time T5. And, when time T5 is reached, the voltage applied to the drive motor 5 lowers gradually. Consequently, the force of pressing the rack 27 toward the ejected position decreases gradually, and when time T6 is reached, the pressing force becomes zero. As a result, between time T5 and time T6, the leading end portion of the tray 2 slowly moves a very small distance toward the position in which the tray 2 is stabilized when the pressing force becomes zero, and thereafter stands stationary. Accordingly, as seen from the user, the leading end portion of the tray 2 appears stationary after time T12.

That is, when the voltage applied to the drive motor 5 is suddenly lowered from 2.9 V to 0 V at time T5, a joggle directed in a direction opposite arrow F occurs on the leading end side of the tray 2. However, the voltage applied to the drive motor 5 lowers gradually, so that the aforesaid joggle turns to a slow movement and becomes inconspicuous.

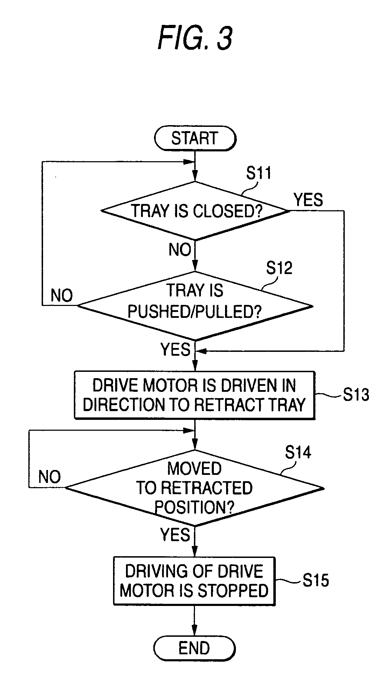

Fig. 3 is a flowchart showing the major operation of the embodiment to move the tray toward the retracted position. The operation to move the tray toward the retracted position will be described with reference to Fig. 3 according to need.

After performing control to move the tray 2 to the ejected position, the motor drive unit 204 starts a loop operation for checking whether the open/close key has been operated or not and whether the tray 2 has been pushed or pulled by the user (steps S11, S12). Additionally, after the control to move the tray 2 to the ejected position is performed, the tray 2 is normally in the ejected position. However, when the tray 2 is hindered from moving in the middle of moving to the ejected position, the tray 2 is positioned midway between the ejected position and the retracted position.

In the aforesaid state, i.e., in the state where the tray 2 is positioned in the ejected position or positioned between the retracted position and the ejected position, when the open/close key is operated, the motor drive unit 204 drives the drive motor 5 in a direction to retract the tray 2 (steps S11, S13). Besides, even when the tray 2 is pushed or pulled in the aforesaid state to thereby rotate the drive motor 5 and generate the electromotive force, the motor drive unit 204 drives the drive motor 5 in the direction to retract the tray 2 (steps S 12, S13).

Thereafter, based on the output of the detection switch 19, the motor drive unit 204 checks whether the tray 2 has moved to the retracted position or not. And, when the output of the detection switch 19 indicates that the tray 2 has moved to the retracted position, the driving of the motor drive unit 204 is stopped (steps S14, S15). Consequently, when the tray 2 is in the ejected position or positioned midway between the retracted position and the ejected position, the operation of the open/close key or the operation of pushing/closing the tray 2 is performed, thereby retracting the tray 2 to the retracted position.

Additionally, the invention is not limited to the aforesaid embodiment but is capable of various modifications. For example, so long as the second drive voltage is made higher than the first drive voltage, it is possible that the first drive voltage is set to a voltage other than 2.9 V and that the second drive voltage is set to a voltage other than 4 V.

Besides, the period of time required to lower the voltage applied to the drive motor 5 from the second drive voltage to the first drive voltage, as well as the period of time required to lower the voltage applied to the drive motor 5 from the first drive voltage to 0 V, can adopt any period of time other than the aforesaid.

Besides, the description has been made of the case
in which the invention is applied to the DVD player, but the invention can similarly be applied to any other device (e.g., a DVD recorder).

## Claims

1. A tray drive comprising:
a tray that moves reciprocally between an ejected position in which to perform replacement etc. of a disk placed thereon and a retracted position in which to perform reproduction etc. of the disk placed thereon;
a tray drive mechanism for reciprocally moving the tray with a drive motor as a power source;
a motor drive unit for driving the drive motor;
a tray position detection unit for detecting that the tray has moved to the retracted position; and
a voltage detection unit for detecting whether the drive motor has generated an electromotive force or not,
wherein:
the tray drive mechanism including a mechanism chassis that, having a spindle motor for rotationally driving the disk and a pickup for reading data recorded on the disk, moves reciprocally between a clamping position operable to clamp the disk and an unclamping position in which to move the tray, in which, to move the tray in the retracted position to the ejected position, the tray drive mechanism switches the transmission path of the output of the drive motor, thereby sequentially performing the movement of the mechanism chassis from the clamping position to the unclamping position and the movement of the tray from the retracted position to the ejected position;
to move the mechanism chassis from the clamping position to the unclamping position, the motor drive unit applies to the drive motor a second drive voltage that is higher than a first drive voltage;
when a predetermined time duration elapses after the time at which the mechanism chassis is deemed to have moved to the unclamping position, the motor drive unit gradually lowers a voltage applied to the drive motor, from the second drive voltage toward the first drive voltage;
when a predetermined time duration elapses after the time at which the tray is deemed to have moved to the ejected position, the motor drive unit gradually lowers the voltage applied to the drive motor, from the first drive voltage toward 0 V; and
when the voltage detection unit detects the generation of the electromotive force with the driving of the drive motor being stopped, the motor drive unit applies to the drive motor a voltage of polarity with which to move the tray toward the retracted position, until the tray position detection unit detects that the tray has moved to the retracted position.

2. A tray drive comprising:
a tray that moves reciprocally between an ejected position in which to perform replacement etc. of a disk placed thereon and a retracted position in which to perform reproduction etc. of the disk placed thereon;
a tray drive mechanism for reciprocally moving the tray with a drive motor as a power source; and
a motor drive unit for driving the drive motor,
wherein
after the movement of the tray in the retracted position is started by applying a first drive voltage to the drive motor, when a predetermined time duration elapses after the time at which the tray is deemed to have moved to the ejected position, the motor drive unit gradually lowers a voltage applied to the drive motor, from the first voltage toward 0 V.

3. A tray drive according to claim 2, wherein:
the tray drive mechanism includes a mechanism chassis that, having a spindle motor for rotationally driving the disk and a pickup for reading data recorded on the disk, moves reciprocally between a clamping position operable to clamp the disk and an unclamping position in which to move the tray;
to move the tray in the retracted position to the ejected position, the tray drive mechanism switches the transmission path of the output of the drive motor, thereby sequentially performing the movement of the mechanism chassis from the clamping position to the unclamping position and the movement of the tray from the retracted position to the ejected position; and
to move the mechanism chassis from the clamping position to the unclamping position, the motor drive unit applies to the drive motor a second drive voltage that is higher than the first drive voltage, whereas, when a predetermined time duration elapses after the time at which the mechanism chassis is deemed to have moved to the unclamping position, the motor drive unit changes the voltage applied to the drive motor, from the second drive voltage to the first drive voltage.

4. A tray drive according to claim 3, wherein
the motor drive unit gradually lowers the voltage applied to the drive motor, thereby changing the voltage applied to the drive motor, from the second drive voltage to the first drive voltage.
